# EUROPEAN PATENT APPLICATION

(11) **EP 4 339 768 A1**
(43) Date of publication of application: **20.03.2024**
(21) Application number: 22807254.2
(22) Date of filing: 29.03.2022
(51) Int. Cl.: G06F 8/71, G06F 8/65, G06F 11/36

(54) **VERSION MANAGEMENT METHOD, VERSION MANAGEMENT PROGRAM, AND VERSION MANAGEMENT SYSTEM**

(30) Priority: 14.05.2021 JP 2021082089
(71) Applicant: OMRON Corporation, Kyoto 600-8530 (JP)
(72) Inventor: SHIGEMORI, Yutsuka, Kyoto-shi, Kyoto 600-8530 (JP)
(74) Representative: Mewburn Ellis LLP
(86) International application number: PCT/JP2022/015492
(87) International publication number: WO 2022/239549

(57) **Abstract**

Provided is a technique for specifying a simulation environment that corresponds to a real environment and is used for verification of a program having a failure. A version management method of a program of a control device, includes: generating, from a project (210) of a first version, a first execution file (200) and a first simulation execution file, and registering the first execution file (200) and the first simulation execution file in an execution data repository (304); deploying the first execution file (200) in the control device; linking the control device to the project (210) of the first version; specifying the project (210) of the first version linked to the control device, based on detection of a failure in the first execution file (200) deployed in the control device; and acquiring the first execution file (200) and the first simulation execution file for simulation of the first execution file (200).

## Description

### TECHNICAL FIELD

The present disclosure relates to version management of a project, and more specifically, to version management of a project including a program of a control device and data for simulation.

### BACKGROUND ART

When a program is installed, a control device such as a programmable logic controller (PLC) can control an industrial machine or the like on the basis of the installed program. When a developer develops a program of a control device, the developer manages the program by using a version management system in some cases.

Regarding version management of a program, for example, WO 2019/229845 A (PTL 1) discloses a program management system "comprises: a programming assistance device that edits a program Pv2 to create a program Pv3, and creates, by means of compilation, an execution module M3 corresponding to a difference from the program Pv2; and a management device that manages an execution module that is being executed in a control device, a program of a latest version, and compilation information indicating whether the program of the latest version has been compiled. If the execution module M3 is to be written to a PLC that is executing an execution module M1, the management device manages the program Pv3, information specific to the execution module M3, and a compilation flag indicating that the program Pv3 has been compiled. If the execution module M3 is not to be written to the PLC, the management device manages the program Pv3, information specific to the execution module M1, and a compilation flag indicating that the program Pv3 has not been compiled" (see ABSTRACT).

### CITATION LIST

### PATENT LITERATURE

PTL 1: WO 2019/229845 A

### SUMMARY OF INVENTION

### TECHNICAL PROBLEM

An operation of the program of the control device is checked by simulation in some cases. Therefore, when a failure occurs in a real environment, it is necessary to specify a simulation environment that corresponds to a real environment and is used for verification of the program having a failure. However, according to the technique disclosed in PTL 1, it is not possible to specify the simulation environment that corresponds to the real environment and is used for verification of the program having a failure. Therefore, there is a need for a technique for specifying a simulation environment that corresponds to a real environment and is used for verification of a program having a failure.

The present disclosure has been made in view of the above background, and an object in one aspect is to provide a technique for specifying a simulation environment corresponding to a real environment used for verification of a defective program.

### SOLUTION TO PROBLEM

According to an embodiment, a version management method of a program for a control device is provided. A version management method includes: generating, from a project of a first version, a first execution file and a first simulation execution file necessary for simulation of the first execution file, and registering the first execution file and the first simulation execution file in an execution data repository; deploying the first execution file in the control device; linking the control device to the project of the first version; specifying the project of the first version linked to the control device, based on detection of a failure in the first execution file deployed in the control device; and acquiring the first execution file and the first simulation execution file for simulation of the first execution file.

This disclosure enables a user to, when the failure in the first execution file deployed in the control device is detected, specify the project including a source file of the first execution file and the first simulation execution file necessary for the simulation of the first execution file. As a result, it is easy to debug the first execution file.

In the above disclosure, the linking the control device to the project of the first version includes linking a device identifier (ID) of the control device to a version ID and a project ID of the project of the first version.

This disclosure makes it is possible to retrieve a specific project of a specific version on the basis of the device ID of the control device in which the first execution file is deployed.

In the above disclosure, the version management method, further includes notifying, based on the detection of the failure in the first execution file deployed in the control device, a user terminal of information on the failure and the project of the first version.

This disclosure enables the user to recognize the failure in the first execution file and further to start a debugging work by using the notified project.

In the above disclosure, the first execution file is linked to the device ID. The first simulation execution file is linked to the project ID. The acquiring the first execution file and the first simulation execution file for simulation of the first execution file includes: acquiring the first execution file from the execution data repository, based on the device ID; and acquiring the first simulation execution file from the execution data repository, based on the project ID.

This disclosure makes it possible to acquire data necessary for the simulation of the first execution file having a failure from the execution data repository.

In the above disclosure, the acquiring the first execution file and the first simulation execution file for simulation of the first execution file includes generating again the first execution file and the first simulation execution file from the project of the first version.

This disclosure makes it possible to generate (compile) again, data necessary for the simulation of the first execution file having a failure from the retrieved project.

In the above disclosure, the version management method further includes deploying in the control device, based on occurrence of the failure in the control device, a second execution file generated from a project of a second version older than the project of the first version.

This disclosure enables the control device to operate continuously.

In the above disclosure, the version management method further includes performing, based on the detection of the failure in the first execution file deployed in the control device, the simulation of the first execution file by using the first simulation execution file.

With this disclosure, by performing the simulation, it is possible to verify the failure in the first execution file.

In the above disclosure, the version management method further includes receiving a commit of the project of the first version, based on completion of the simulation of the first execution file.

With this disclosure, by receiving only a commit of a project whose simulation is completed, it is possible to reduce bugs in the execution file deployed in the control device.

According to another embodiment, a program for causing a computer to execute the above method is provided.

This disclosure can cause the computer to execute the version management method.

According to another embodiment, a system including a storage unit storing the program and a processor configured to execute the program is provided.

This disclosure can cause the system to perform the version management method.

### ADVANTAGEOUS EFFECTS OF INVENTION

In accordance with an embodiment, it is possible to specify a simulation environment that corresponds to a real environment and is used for verification of a program having a failure.

The above and other objects of the disclosure, features, aspects, and advantages of the content of the disclosure will become apparent from the following detailed description of the present disclosure that should be understood in conjunction with the accompanying drawings.

### BRIEF DESCRIPTION OF DRAWINGS

Fig. 1 is a diagram illustrating an example of management system 100 in accordance with an embodiment.
Fig. 2 is a diagram illustrating an example of data and a program handled by management system 100.
Fig. 3 is a diagram illustrating an example of a detailed system configuration of management system 100.
Fig. 4 is a diagram illustrating an example of a hardware configuration of a device 400 that implements management system 100.
Fig. 5 is a diagram describing an example of a commit procedure in management system 100.
Fig. 6 is a diagram describing an example of a rollback procedure in management system 100.
Fig. 7 is a flowchart illustrating an example of a commit procedure in management system 100.
Fig. 8 is a flowchart illustrating an example of a rollback procedure in management system 100.

### DESCRIPTION OF EMBODIMENTS

Hereinafter, with reference to the drawings, an embodiment of a technical idea according to the present disclosure will be described. In the following description, the same components are denoted by the same reference signs. Names and functions of the components are the same. Therefore, detailed descriptions thereof will not be repeated.

### <A. Application examples>

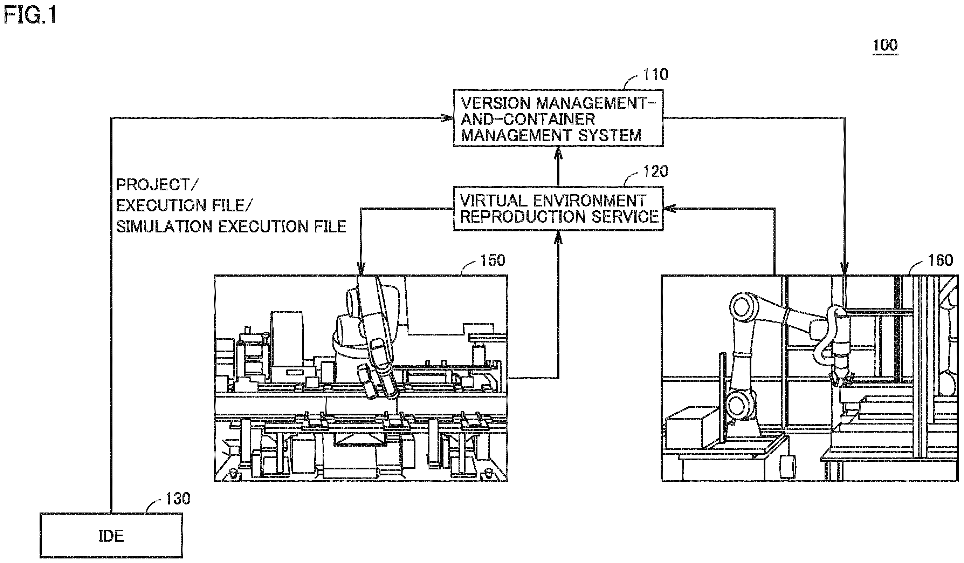

Fig. 1 is a diagram illustrating an example of management system 100 in accordance with the present embodiment. With reference to Fig. 1, there will be described a scene to which the technology according to the present embodiment is applied.

Management system 100 includes a version management-and-container management system 110 and a virtual environment reproduction service 120. Further, management system 100 may include an integrated development environment (IDE) 130.

Management system 100 manages a version of a program of a control device and deploys (installs) the program in the control device, and mainly includes three functions described below. Note that the control device may be, for example, a control device including a plurality of devices.

A first function is a version management function for a program. Management system 100 receives a program of the control device developed by a user, from IDE 130. Then, management system 100 manages the program of the control device developed by the user for each version. In practice, management system 100 receives not only the program alone but also a project including the program and other data, and manages the project for each version.

As an example, the "project" includes: a source file (hereinafter, referred to as "device source file") of a program of the control device; setting data of the program; and a simulation source file, which is data for simulation of the program. In one aspect, the project may include other data.

The "device source file" is compiled to generate an execution file. When the execution file and the setting data are installed, the control device can operate on the basis of the execution file by installing. Note that the compiling may be performed by management system 100 or may be performed by a user terminal in which IDE 130 is installed. In this case, IDE 130 uploads the compiled execution file to management system 100.

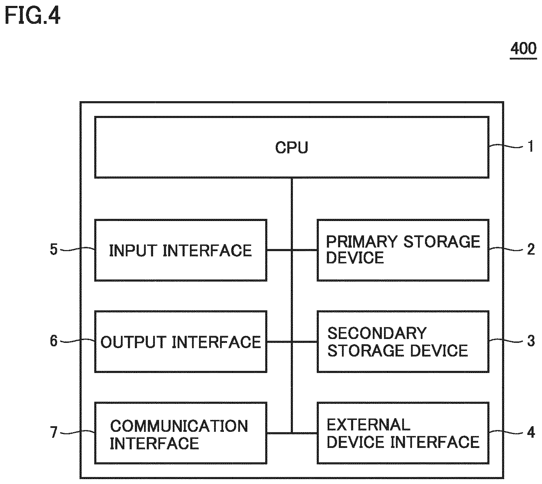

As an example, assuming that a user created a new project (Ver. 1) and registered the project (Ver. 1) in management system 100. In this case, management system 100 stores the project (Ver. 1) in a secondary storage device 3 (see Fig. 4).

Next, assuming that the user created the project (Ver. 2) by editing the project (Ver. 1) and registered the project (Ver. 2) in management system 100. In this case, management system 100 stores only the difference between the project (Ver. 1) and the project (Ver. 2) in secondary storage device 3 (see Fig. 4). As described above, management system 100 stores only the difference between the versions of the project in secondary storage device 3 each time the project is edited (each time the version changes). The user registering each version of the project in management system 100 may be referred to as "commit".

With the first function, for example, when a problem occurs in an execution file (program) installed in the control device, the user can take the following measures: re-installing an old version of the execution file in the control device; and debugging the execution file of the version having a failure.

A second function is a simulation function. The control device conveys a workpiece or assembles workpieces, in a factory or the like. Therefore, in order to check whether the execution file of the control device operates without any problem, a simulation environment (virtual environment 150) simulating a real environment 160 is required.

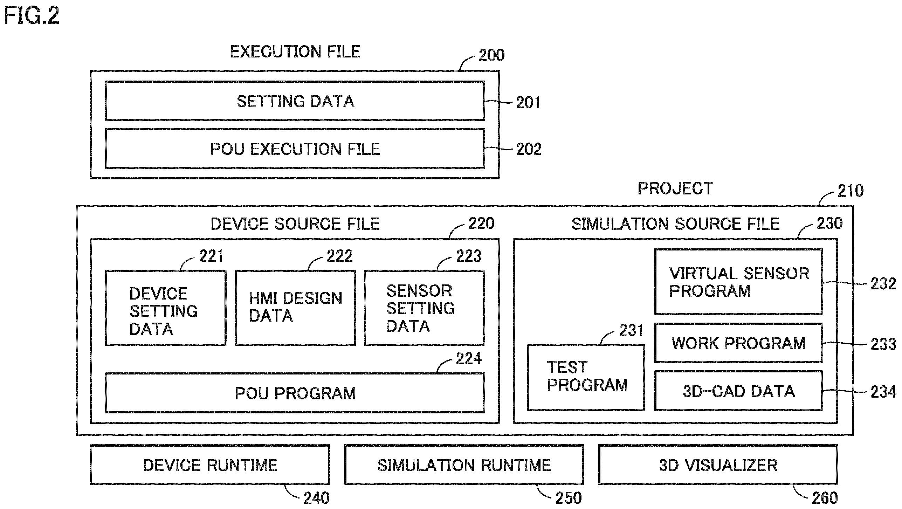

As described above, the project file includes the simulation source file. The "simulation source file" includes the following data for reproducing real environment 160, for example: a test program 231 (see Fig. 2) in virtual environment 150; a virtual sensor program 232 (see Fig. 2); a work program that defines operation of a workpiece (see Fig. 2); and data for constructing a simulation environment such as 3D-CAD (3-Dimensional Computer-Aided Design) data 234 (see Fig. 2) of a device and the workpiece.

The simulation source file is compiled to generate a simulation execution file. Note that the compiling may be performed by management system 100 or may be performed by the user terminal in which IDE 130 is installed. In this case, IDE 130 uploads the compiled simulation execution file to management system 100. It can be said that both the simulation source file and the simulation execution file are simulation data necessary for execution of a simulation.

Management system 100 performs a simulation using the execution file and the simulation execution file. Management system 100 receives a commit of the project on the basis of completion of the simulation without any problem.

The second function ensures that the program included in the project committed to management system 100 is a program that has passed at least a test in virtual environment 150.

A third function is a function that supports specify a cause of a failure when the failure in the program occurs. Normally, management system 100 installs the latest execution file in the control device of real environment 160. However, when the execution file is installed in the control device of real environment 160, a failure of the execution file may be found. In this case, management system 100 reinstalls an execution file of an old version in the control device. This process may be referred to as "rollback". In one aspect, management system 100 may perform the rollback on the basis of reception of a notification from the control device or on the basis of reception of a request or the like from the user.

As an example, assuming that a failure occurs in an execution file (A) installed (deployed) in the control device. In this case, the control device can continue to operate for the time being due to the rollback, but the user needs to investigate the failure of the execution file (A). In order to investigate the failure of the execution file (A), management system 100 needs to specify a simulation execution file (A) used for the simulation of the execution file (A). Note that management system 100 may specify the simulation source file used for the simulation of the program.

Therefore, management system 100 links the following file and IDs to each other in advance and stores the IDs in secondary storage device 3: a project ID of a project (A) including a device source file (A) for generating the execution file (A) and a simulation source file (A) for generating the simulation execution file (A); and a version ID of the project (A), and a device ID of the control device in which the execution file (A) is installed. In addition, management system 100 links the execution file (A) to the device ID or the device ID and the version ID in advance and stores the execution file (A) in secondary storage device 3. Further, management system 100 links the simulation execution file (A) to the project ID or the project ID and the version ID in advance and stores the simulation execution file (A) in secondary storage device 3.

For example, assuming that management system 100 receives the device ID of the control device together with a notification of a failure from the control device. In this case, management system 100 can specify the project ID and the version ID of the project (A) linked to the device ID of the control device. Further, management system 100 can specify the simulation execution file (A) linked to the project ID or the project ID and the version ID.

As a matter of course, since management system 100 has specified the project (A), management system 100 can specify following files: the execution file (A) generated by compiling the device source file included in the project (A); and the simulation execution file (A) generated by compiling the simulation source file. In one aspect, management system 100 may recompile various files in the project (A) to generate the execution file (A) and the simulation execution file (A).

Management system 100 can performs the simulation of the execution file (A) again on the basis of the execution file (A) and the simulation execution file (A).

Further, management system 100 may transmit the information related to the failure and the information related to the project (A), to the user terminal in which IDE 130 is installed. The user can perform debugging work by referring to the device source file (A) on the basis of the notification. In addition, the user can use the reconstructed virtual environment 150 in the debugging work.

With the third function, the user can easily reconstruct virtual environment 150 for the simulation of the execution file (A) having a failure, and can debug the execution file (A) using reconstructed virtual environment 150.

Version management-and-container management system 110 stores the project, the execution file, and the simulation execution file. In addition, version management-and-container management system 110 provides a function of committing a project, a function of rollbacking a project, and a function of deploying an execution file. Note that the container can include the execution file, the simulation execution file, and the like described later.

Virtual environment reproduction service 120 provides a function of constructing virtual environment 150. Virtual environment reproduction service 120 performs the simulation of the program on the basis of the execution file and the simulation execution file.

IDE 130 provides a function of editing the project. More specifically, IDE 130 has a function of editing the device source file and a function of editing the data (such as 3D-CAD data) included in the simulation source file. In addition, IDE 130 has a function of committing the project, the execution file, and the simulation execution file to version management-and-container management system 110. Furthermore, IDE 130 has a function of requesting container management system 110 to perform processing such as rollback or deployment.

In one aspect, IDE 130 can be installed and used in a user terminal such as a personal computer, a smartphone, or a tablet. In another aspect, IDE 130 may be provided as a web application.

### <B. Data and system configuration>

Next, with reference to Figs. 2 to 4, a description will be given on configuration examples of data and programs handled by management system 100 and on a detailed configuration example of management system 100.

Fig. 2 is a diagram illustrating an example of data and programs handled by management system 100. The data handled by management system 100 mainly includes an execution file 200, a project (also referred to as "project file") 210, a device runtime 240, a simulation runtime 250, and a 3D visualizer 260.

Execution file 200 is data actually installed in the control device and includes setting data 201 and a program organization unit (POU) execution file 202.

POU execution file 202 is a program executed by the control device. Setting data 201 is data referred to by POU execution file 202.

Project 210 includes a program of the control device, data necessary for simulation, and the like. The user generates and edits project 210 using IDE 130. Project 210 includes a device source file 220 and a simulation source file 230.

Device source file 220 includes device setting data 221, human machine interface (HMI) design data 222, sensor setting data 223, and a POU program 224.

Device setting data 221 includes various settings of the control device. HMI design data 222 includes a design of a user interface displayed on a display, a touch panel, or the like. Sensor setting data 223 includes data related to a sensor used in a factory or the like. POU program 224 is a source file of POU execution file 202 executed by the control device. POU program 224 can refer to device setting data 221, HMI design data 222, and sensor setting data 223.

Simulation source file 230 includes test program 231, virtual sensor program 232, a work program 233, and 3D-CAD data 234.

Test program 231 is a program that defines simulation content (content of a work performed by the control device on virtual environment 150). Virtual sensor program 232 is a program that defines an operation of a sensor on virtual environment 150. Work program 233 is a program that defines an operation of the workpiece on virtual environment 150. Shapes of various objects (device, workpiece, and the like) in virtual environment 150 are defined by 3D-CAD data 234.

Device runtime 240 is a program that provides various functions necessary to cause the control device to operate. POU execution file 202 can call and use the functions of device runtime 240.

Simulation runtime 250 is a program for providing the simulation function. Simulation runtime 250 provides various functions of virtual environment reproduction service 120.

A function of presenting the content of the simulation on virtual environment 150 is provided by 3D visualizer 260 to the user. As an example, IDE 130 (user terminal) can display the contents of the simulation on the display or the like using the function of 3D visualizer 260.

Note that various types of data illustrated in Fig. 2 are an example, and management system 100 may actually handle data other than the various types of data illustrated in Fig. 2. In another aspect, management system 100 does not need to handle some of the various types of data illustrated in Fig. 2.

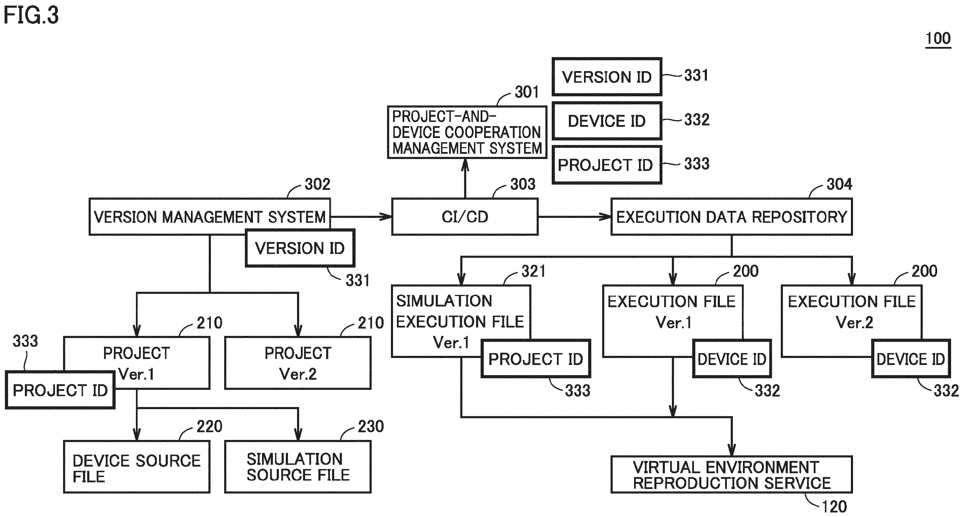

Fig. 3 is a diagram illustrating an example of a detailed system configuration of management system 100. Management system 100 includes a project-and-device cooperation management system 301, a version management system 302, a continuous integration and continuous delivery (CI/CD) 303, an execution data repository 304, and virtual environment reproduction service 120.

Note that version management-and-container management system 110 illustrated in Fig. 1 includes all of project-and-device cooperation management system 301, version management system 302, CI/CD 303, and execution data repository 304.

Version management system 302 manages the version of project 210. The user can commit project 210 edited by using IDE 130 to version management system 302. The user may commit a plurality of projects 210 to version management system 302. Each project 210 includes a unique project ID 333.

Every time a commit is received, version management system 302 stores a difference between the version of the previous project 210 and the version of the current project 210. When accepting a commit of a plurality of different projects 210, version management system 302 manages the version of each project 210 individually. Further, version management system 302 links a version ID 331 to a committed project. Management system 100 can search for a specific version of a specific project 210 by referring to project ID 333 and version ID 331.

CI/CD 303 has a function of testing the program included in project 210 and automatically deploying the program to the control device and other functions. CI/CD 303 acquires execution file 200 and a simulation execution file 321 from version management system 302. In one aspect, CI/CD 303 may acquire project 210 from version management system 302 and execute compiling processing of project 210.

Next, CI/CD 303 registers execution file 200 and simulation execution file 321 in execution data repository 304. In addition, CI/CD 303 requests virtual environment reproduction service 120 to perform a simulation using execution file 200 and simulation execution file 321. The request may be executed via execution data repository 304.

Further, CI/CD 303 links version ID 331, a device ID 332, and project ID 333 to each other and stores the linked IDs in project-and-device cooperation management system 301. Device ID 332 uniquely identifies the control device in which execution file 200 is deployed. By referring to version ID 331, device ID 332, and project ID 333, management system 100 can specify project 210 related to execution file 200 installed in the control device in which the failure has occurred. Furthermore, since management system 100 has specified project 210, management system 100 can specify following files: execution file 200 generated by compiling device source file 220 included in project 210; and simulation execution file 321 generated by compiling simulation source file 230.

Execution data repository 304 stores execution file 200 and simulation execution file 321. Execution data repository 304 may store execution file 200 and simulation execution file 321 of each version. Each execution file 200 is linked to each device ID 332. Each simulation execution file 321 is linked to each project ID 333. In one aspect, CI/CD 303 may perform these pieces of linking processing. In one aspect, version ID 331 may also be linked to execution file 200 and simulation execution file 321.

Execution data repository 304 may deploy execution file 200 in the control device on the basis of, for example, instructions from CI/CD 303. In addition, execution data repository 304 can deploy execution file 200 and simulation execution file 321 in virtual environment reproduction service 120 on the basis of, for example, an instruction from CI/CD 303.

On the basis of notification, containing device ID 332, of a failure received from real environment 160 or the like, project-and-device cooperation management system 301 refers to version ID 331, device ID 332, and project ID 333 to specify project 210 and simulation execution file 321 related to execution file 200 installed in the control device in which the failure has occurred. In one aspect, project-and-device cooperation management system 301 may receive a notification of a failure via CI/CD 303.

In addition, project-and-device cooperation management system 301 notifies CI/CD 303 of information related to the specified project 210. CI/CD 303 may request virtual environment reproduction service 120 to simulate the specified project 210 on the basis of the information related to the specified project 210. In addition, CI/CD 303 can notify IDE 130 (user terminal) of information related to the failure and the information related to the identified project 210. In one aspect, project-and-device cooperation management system 301 may notify IDE 130 of information related to the failure and the information related to the specified project 210.

Fig. 4 is a diagram illustrating an example of a hardware configuration of a device 400 that implements management system 100. In one aspect, management system 100 can be implemented as software on one or more pieces of hardware. In another aspect, management system 100 may be implemented as software on a server or a cloud environment including a plurality of devices 400. In another aspect, device 400 may be used as a user terminal in which IDE 130 is installed. In another aspect, the control device may include a part or all of the configuration of device 400.

Device 400 includes a central processing unit (CPU) 1, a primary storage device 2, secondary storage device 3, an external device interface 4, an input interface 5, an output interface 6, and a communication interface 7.

CPU 1 can execute a program for implementing various functions of device 400. CPU 1 may be configured with, for example, at least one integrated circuit. The integrated circuit may be configured with, for example, at least one CPU, at least one field programmable gate array (FPGA), or a combination thereof.

Primary storage device 2 stores a program executed by CPU 1 and data referred to by CPU 1. In one aspect, primary storage device 2 may be implemented by a dynamic random access memory (DRAM), a static random access memory (SRAM), or the like.

Secondary storage device 3 is a nonvolatile memory and may store a program executed by CPU 1 and data referred to by CPU 1. In this case, CPU 1 executes the program read out from secondary storage device 3 to primary storage device 2 and refers to the data read out from secondary storage device 3 to primary storage device 2. In one aspect, secondary storage device 3 may be implemented by a hard disk drive (HDD), a solid state drive (SSD), an erasable programmable read only memory (EPROM), an electrically erasable programmable read only memory (EEPROM), a flash memory, or the like.

External device interface 4 can be connected to an any external device such as a printer, a scanner, or an external HDD. In one aspect, external device interface 4 may be implemented by a universal serial bus (USB) terminal or the like.

Input interface 5 can be connected to any input device such as a keyboard, a mouse, a touchpad, or a game pad. In one aspect, input interface 5 may be implemented by a USB terminal, a PS/2 terminal, a Bluetooth (registered trademark) module, or the like.

Output interface 6 can be connected to any output device such as a cathode ray tube display, a liquid crystal display, or an organic electro-luminescence (EL) display. In one aspect, output interface 6 may be implemented by a USB terminal, a D-sub terminal, a digital visual interface (DVI) terminal, a high-definition multimedia interface (HDMI [registered trademark]) terminal, or the like.

Communication interface 7 is connected to a wired or wireless network device. In one aspect, communication interface 7 may be implemented by a wired local area network (LAN) port, a wireless fidelity (Wi-Fi [registered trademark]) module, and the like. In another aspect, communication interface 7 may transmit and receive data by using a communication protocol such as transmission control protocol/internet protocol (TCP/IP) or user datagram protocol (UDP).

### <C. Commit and Rollback Procedure>

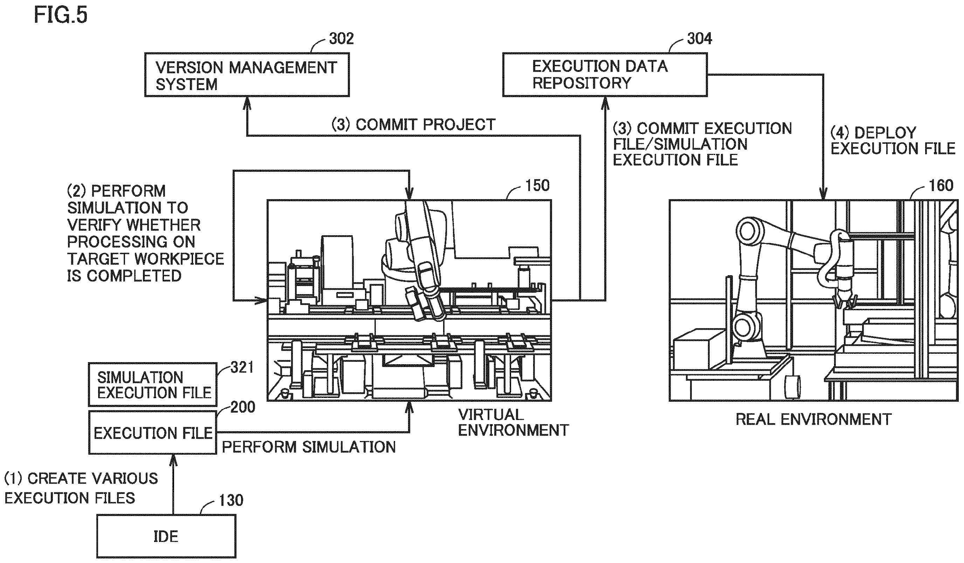

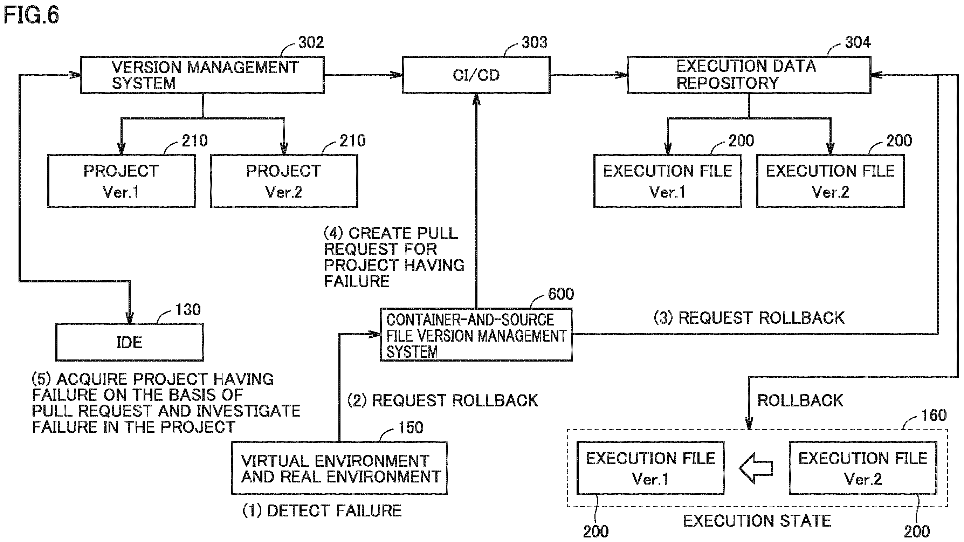

Next, with reference to Figs. 5 and 6, a commit procedure and a rollback procedure in management system 100 according to the present embodiment will be described.

Fig. 5 is a diagram describing an example of the commit procedure in management system 100. Note that Fig. 5 illustrates only a part of the configuration illustrated in Fig. 3 necessary for describing the commit procedure. Unlike a typical version management system, the commit in management system 100 includes project verification processing using simulation.

First, IDE 130 compiles device source file 220 and simulation source file 230 included in project 210 on the basis of user operation to generate execution file 200 and simulation execution file 321. In one aspect, IDE 130 may compile only some files (POU program 224, test program 231, virtual sensor program 232, work program 233, and the like) included in device source file 220 and simulation source file 230.

Next, IDE 130 performs simulation using project 210 and simulation execution file 321. The simulation can verify whether project 210 runs correctly in virtual environment 150.

Note that the simulation is performed by virtual environment reproduction service 120. In one aspect, IDE 130 may include virtual environment reproduction service 120 as a part of its function. In another aspect, IDE 130 may request virtual environment reproduction service 120 on a server or a cloud environment to perform the simulation.

Next, IDE 130 can commit project 210 to version management system 302 on the basis of completion of the simulation of project 210. Similarly, IDE 130 can commit execution file 200 to execution data repository 304 on the basis of the completion of the simulation of project 210. In addition to execution file 200, IDE 130 may commit simulation execution file 321 to execution data repository 304.

The "completion of the simulation of project 210" indicates that predetermined processing such as conveyance or assembly of workpieces is completed without any error occurring during the simulation. In one aspect, IDE 130 or virtual environment reproduction service 120 may determine that the simulation of project 210 has been completed on the basis of the fact that the simulation has been successfully performed a predetermined number of times or more.

Version management system 302 and execution data repository 304 receive the commits on the basis of the completion of the simulation of project 210. Otherwise, version management system 302 and execution data repository 304 reject the commits. In one aspect, the commit to execution data repository 304 may be performed via CI/CD 303 or version management system 302 and CI/CD 303.

Next, execution data repository 304 deploys execution file 200 in real environment 160. In one aspect, execution data repository 304 may deploy execution file 200 in real environment 160 on the basis of a command from CI/CD 303.

As described above, management system 100 can suppress the occurrence of failures by deploying, in real environment 160, only execution file 200 whose operation has been verified by simulation.

Fig. 6 is a diagram illustrating an example of the rollback procedure in management system 100. Note that Fig. 6 illustrates only a part of the configuration illustrated in Fig. 3 necessary for describing the rollback procedure.

Management system 100 includes a container-and-source file version management system 600 in addition to the configuration illustrated in Fig. 3. Container-and-source file version management system 600 manages various types of notifications such as a rollback and a pull request. In one aspect, container-and-source file version management system 600 may be a part of the function of CI/CD 303. In another aspect, container-and-source file version management system 600 may be implemented as a standalone service.

The rollback in management system 100 includes processing of specifying simulation execution file 321 (or simulation source file 230) necessary for simulation of execution file 200 (or device source file 220) having a failure.

First, a failure in project 210 is detected in virtual environment 150 or real environment 160. In virtual environment 150, virtual environment reproduction service 120 can detect the failure in project 210. In real environment 160, the control device can detect the failure in project 210.

Next, container-and-source file version management system 600 receives a notification of the failure in project 210 and a request for a rollback of project 210 from virtual environment 150 or real environment 160. The notification of the failure or the rollback request includes at least device ID 332.

Next, when project 210 having the failure is running in real environment 160, container-and-source file version management system 600 outputs the rollback request to execution data repository 304. In one aspect, container-and-source file version management system 600 may output the rollback request to CI/CD 303. In this case, CI/CD 303 transfers the rollback request to execution data repository 304.

Next, container-and-source file version management system 600 outputs a pull request to CI/CD 303. The pull request includes at least device ID 332.

CI/CD 303 specifies version ID 331 and project ID 333 linked to device ID 332 on the basis of reception of the pull request. CI/CD 303 transfers the pull request for the project specified on the basis of version ID 331 and project ID 333 to version management system 302. In one aspect, CI/CD 303 may perform a series of processing necessary for a pull request using the function of project-and-device cooperation management system 301.

Next, IDE 130 acquires, on the basis of user operation, the project for which the pull request has been made. The user verifies a failure of the acquired project. Note that IDE 130 may start simulation of the project on the basis of user operation or automatically. The user may commit the verified project to version management system 302. The commit procedure is similar to the procedure illustrated in Fig. 5.

As described above, when there is a failure in project 210, management system 100 finds project 210 of a specific version on the basis of device ID 332. Project 210 of the specific version includes device source file 220 before being compiled to generate execution file 200 having a failure and simulation source file 230 necessary for simulation of execution file 200 having the failure.

In one aspect, management system 100 may retrieve execution file 200 from execution data repository 304 on the basis of device ID 332 or device ID 332 and version ID 331 for execution of simulation. Furthermore, management system 100 may retrieve simulation execution file 321 from execution data repository 304 on the basis of project ID 333 or project ID 333 and version ID 331. In another aspect, management system 100 may compile device source file 220 to generate execution file 200, and compile simulation source file 230 to generate simulation execution file 321. In another aspect, management system 100 may start the simulation of execution file 200 having a failure automatically or on the basis of a request from IDE 130.

Note that simulation execution file 321 and simulation source file 230 retrieved by management system 100 are, for example, data necessary for execution of simulation that simulates real environment 160 in which execution file 200 having a failure is installed.

### <D. Flowchart>

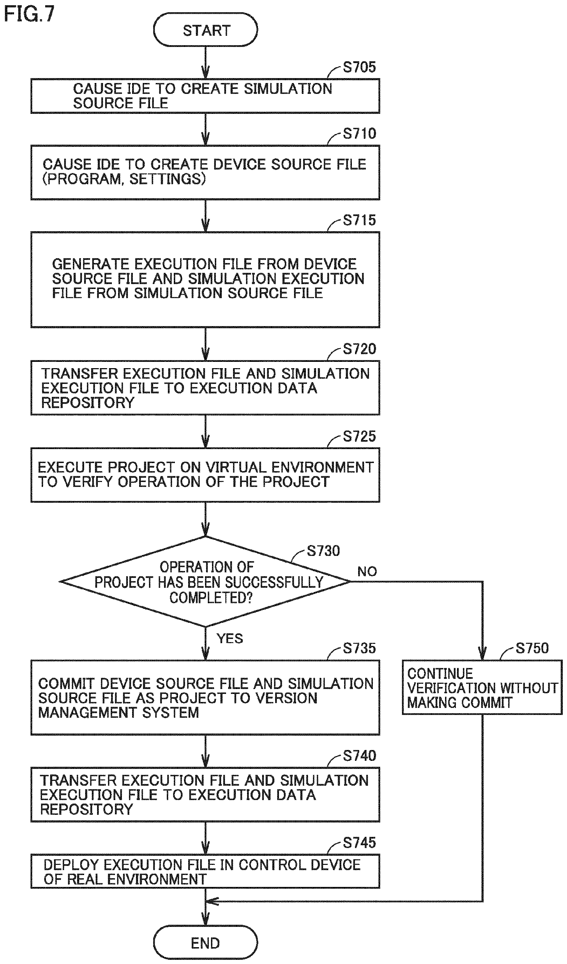

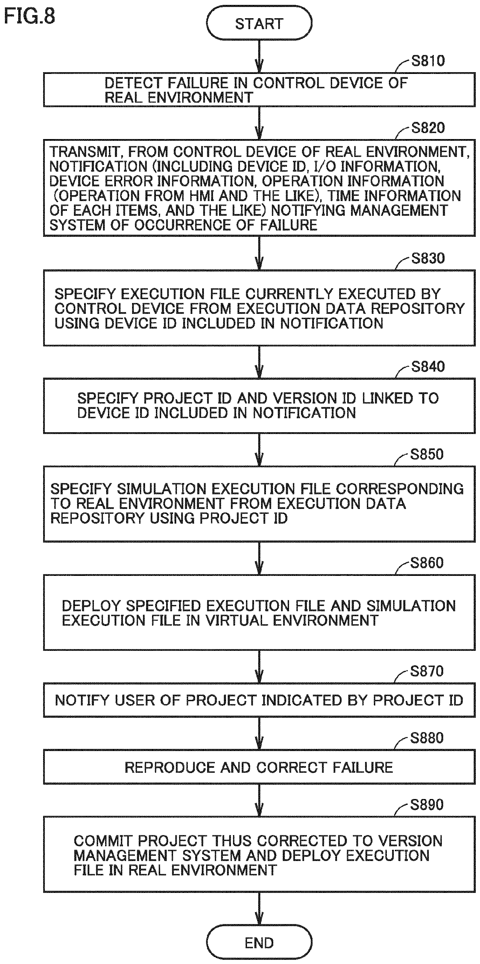

Next, with reference to Figs. 7 and 8, a procedure of processing in management system 100 will be described. In one aspect, management system 100, the user terminal, and CPU 1 of the control device may load a program for the processing illustrated in Fig. 7 or Fig. 8 from secondary storage device 3 into primary storage device 2 and execute the program. In another aspect, a part or all of the processing can be implemented as a combination of circuit elements configured to perform the processing.

Fig. 7 is a flowchart illustrating an example of the commit procedure in management system 100. In step S705, the user terminal causes IDE 130 to create simulation source file 230 on the basis of user operation. In step S710, the user terminal causes IDE 130 to create device source file 220 on the basis of user operation. In step S715, the user terminal generates execution file 200 from device source file 220 and simulation execution file 321 from simulation source file 230 on the basis of user operation.

In step S720, the user terminal transfers execution file 200 and simulation execution file 321 to execution data repository 304 on the basis of user operation. At this time, execution data repository 304 receives execution file 200 and simulation execution file 321 in a transitory manner. Note that execution data repository 304 does not permanently store execution file 200 and simulation execution file 321 and deploy execution file 200 unless the verification of execution file 200 based on simulation is completed.

In step S725, management system 100 executes project 210 on virtual environment 150 to verify the operation of the project. More specifically, virtual environment reproduction service 120 verifies the operation of execution file 200 included in project 210 using simulation execution file 321.

In step S730, management system 100 determines whether the operation of project 210 has been successfully completed. The operation of project 210 corresponds to the operation of execution file 200 included in project 210. When determining that the operation of project 210 has been successfully completed (YES in step S730), management system 100 transfers the control to step S735. Otherwise (NO in step S730), management system 100 transfers the control to step S750.

In step S735, management system 100 commits device source file 220 and simulation source file 230 as project 210 to version management system 302. In one aspect, management system 100 may transmit a simulation completion notification to the user terminal. In this case, the user terminal can commit device source file 220 and simulation source file 230 as project 210 to version management system 302 on the basis of user operation.

In step S740, management system 100 transfers (commits) execution file 200 and simulation execution file 321 to execution data repository 304. Since execution file 200 has been already verified, execution data repository 304 can permanently store execution file 200 and simulation execution file 321. In one aspect, upon receipt of the simulation completion notification, the user terminal may transfer execution file 200 and simulation execution file 321 to execution data repository 304.

In step S745, management system 100 installs (deploys) execution file 200 in the control device of the real environment. In step S750, management system 100 continues the verification of execution file 200 without making a commit. In one aspect, the user terminal having IDE 130 installed therein may verify execution file 200.

Fig. 8 is a flowchart illustrating an example of the rollback procedure in management system 100. In step S810, the control device of real environment 160 detects a failure in execution file 200 installed in the control device. In step S820, the control device of real environment 160 transmits a notification (device ID 332, input (I)/output (O) information, device error information, operation information (operation from HMI and the like), time information of each of these items, and the like) notifying management system 100 of the occurrence of the failure.

In step S830, management system 100 specifies execution file 200 currently executed by the control device from execution data repository 304 using device ID 332 included in the notification. In step S840, management system 100 specifies project ID 333 and version ID 331 linked to device ID 332 included in the notification. In one aspect, instead of the process in step S830, management system 100 may compile device source file 220 included in the specified project 210 to generate execution file 200. In another aspect, management system 100 may specify execution file 200 currently executed by the control device from execution data repository 304 using device ID 332 and version ID 331.

In step S850, management system 100 specifies simulation execution file 321 corresponding to real environment 160 from execution data repository 304 using project ID 333. In one aspect, instead of the process in step S850, management system 100 may compile simulation source file 230 included in the specified project 210 to generate simulation execution file 321. In another aspect, management system 100 may specify simulation execution file 321 corresponding to real environment 160 from execution data repository 304 using project ID 333 and version ID 331.

In step S860, management system 100 deploys the specified execution file 200 and simulation execution file 321 in virtual environment 150. In step S870, management system 100 notifies the user (user terminal) of project 210 indicated by project ID 333. More specifically, management system 100 notifies IDE 130 installed in the user terminal of project 210 indicated by project ID 333. In one aspect, management system 100 may notify a user's e-mail address of project 210 indicated by project ID 333. In one aspect, management system 100 may notify the user terminal of information on the failure (various types of information and the like included in the notification made in step S820). The user can verify the failure in execution file 200 by referring to the various types of information. Meanwhile, management system 100 may deploy execution file 200 of an old version in the control device of real environment 160 to keep the control device running.

In step S880, the user terminal reproduces and corrects the failure in execution file 200 on the basis of user operation. In step S890, the user terminal commits project 210 thus corrected to version management system 302 on the basis of user operation, and further deploys execution file 200 in real environment 160. In one aspect, execution file 200 may be deployed via CI/CD 303 and execution data repository 304.

As described above, management system 100 according to the present embodiment has a function of receiving a commit of a program (execution file 200) whose operation has been verified by simulation. This function allows the user to verify the program under virtual environment 150 before deploying the program in real environment 160.

Management system 100 further has a function of specifying data (simulation execution file 321) necessary for simulation that simulates real environment 160 when a failure in the program under real environment 160 is detected. This function allows the user to immediately perform, when a failure occurs in the program under real environment 160, the simulation of the program having the failure.

### <E. Additional statements>

As described above, the present embodiment includes the following disclosure.

### [Configuration 1]

A version management method of a program of control device including:
generating, from a project (210) of a first version, an execution file (200) and a first simulation execution file (321) necessary for simulation of the execution file (200), and registering the execution file (200) and the first simulation execution file (321) in an execution data repository (304);
deploying the execution file (200) in the control device;
linking the control device to the project (210) of the first version;
specifying the project (210) of the first version linked to the control device, based detection of a failure in the execution file (200) deployed in the control device; and
acquiring the execution file (200) and the first simulation execution file (321) for simulation of the execution file (200).

### [Configuration 2]

The version management method according to configuration 1, in which the linking the control device to the project (210) of the first version includes linking a device identifier (ID) (332) of the control device to a version ID (331) and a project ID (333) of the project (210) of the first version.

### [Configuration 3]

The version management method according to configuration 2, further including notifying, based on the detection of the failure in the execution file (200) deployed in the control device, a user terminal of information on the failure and the project (210) of the first version.

### [Configuration 4]

The version management method according to configuration 2 or 3, in which the execution file (200) is linked to the device ID (332),
the first simulation execution file (321) is linked to the project ID (333), and
the acquiring the execution file (200) and the first simulation execution file (321) for simulation of the execution file (200) includes:
   acquiring the execution file (200) from the execution data repository (304), based on the device ID (332); and
   acquiring the first simulation execution file (321) from the execution data repository (304), based on the project ID (333).

### [Configuration 5]

The version management method according to any of configurations 2 to 4, in which the acquiring the execution file (200) and the first simulation execution file (321) for simulation of the execution file (200) includes generating again the execution file (200) and the first simulation execution file (321) from the project (210) of the first version.

### [Configuration 6]

The version management method according to any of configurations 1 to 5, further including deploying in the control device, based on the occurrence of the failure in the control device, a second execution file generated from a project (210) of a second version older than the project (210) of the first version.

### [Configuration 7]

The version management method according to any of configurations 1 to 6, further including performing, based on the detection of the failure in the execution file (200) deployed in the control device, the simulation of the execution file (200) by using the first simulation execution file (321).

### [Configuration 8]

The version management method according to configuration 1, further including receiving a commit of the project (210) of the first version, based on completion of the simulation of the execution file (200).

### [Configuration 9]

A program for causing a computer to execute the method according to any of configurations 1 to 8.

### [Configuration 10]

A system (100) including:
a storage unit (3) storing the program according to configuration 9; and
a processor (1) configured to execute the program.

It should be understood that the embodiments disclosed herein are illustrative in all respects and are not restrictive. The scope of the present disclosure is defined not by the above description but by the claims, and is intended to include all modifications within the meanings and scope equivalent to the claims. In addition, the disclosed contents described in the exemplary embodiment and the modifications are intended to be implemented alone or in combination as much as possible.

### REFERENCE SIGNS LIST

1: CPU, 2: primary storage device, 3: secondary storage device, 4: external device interface, 5: input interface, 6: output interface, 7: communication interface, 100: management system, 110: container management system, 120: virtual environment reproduction service, 130: IDE, 150: virtual environment, 160: real environment, 200: execution file, 201: setting data, 202: POU execution file, 210: project, 220: device source file, 221: device setting data, 222: HMI design data, 223: sensor setting data, 224: POU program, 230: simulation source file, 231: test program, 232: virtual sensor program, 233: work program, 234: 3D-CAD data, 240: device runtime, 250: simulation runtime, 260: 3D visualizer, 301: project-and-device cooperation management system, 302: version management system, 304: execution data repository, 321: simulation execution file, 331: version ID, 332: device ID, 333: project ID, 400: device, 600: source file version management system

## Claims

1. A version management method of a program of a control device comprising:
generating, from a project of a first version, a first execution file and a first simulation execution file necessary for simulation of the first execution file, and registering the first execution file and the first simulation execution file in an execution data repository;
deploying the first execution file in the control device;
linking the control device to the project of the first version;
specifying the project of the first version linked to the control device, based on detection of a failure in the first execution file deployed in the control device; and
acquiring the first execution file and the first simulation execution file for the simulation of the first execution file.

2. The version management method according to claim 1, wherein the linking the control device to the project of the first version includes linking a device identifier (ID) of the control device to a version ID and a project ID of the project of the first version.

3. The version management method according to claim 2, further comprising notifying, based on the detection of the failure in the first execution file deployed in the control device, a user terminal of information on the failure and the project of the first version.

4. The version management method according to claim 2 or 3, wherein the first execution file is linked to the device ID,
the first simulation execution file is linked to the project ID, and
the acquiring the first execution file and the first simulation execution file for the simulation of the first execution file includes:
acquiring the first execution file from an execution data repository, based on the device ID; and
acquiring the first simulation execution file from an execution data repository, based on the project ID.

5. The version management method according to any of claims 2 to 4, wherein the acquiring the first execution file and the first simulation execution file for the simulation of the first execution file includes generating again the first execution file and the first simulation execution file from the project of the first version.

6. The version management method according to any of claims 1 to 5, further comprising deploying in the control device, based on occurrence of the failure in the control device, a second execution file generated from a project of a second version older than the project of the first version.

7. The version management method according to any of claims 1 to 6, further comprising performing, based on the detection of the failure in the first execution file deployed in the control device, the simulation of the first execution file by using the first simulation execution file.

8. The version management method according to claim 1, further comprising receiving a commit of the project of the first version, based on completion of the simulation of the first execution file.

9. A program for causing a computer to execute the method according to any of claims 1 to 8.

10. A system comprising:
a storage unit storing the program according to claim 9; and
a processor configured to execute the program.
